# EUROPÄISCHE PATENTANMELDUNG

(11) **EP 1 213 820 A2**
(43) Veröffentlichungstag der Anmeldung: **12.06.2002**
(21) Anmeldenummer: 01000710.2
(22) Anmeldetag: 05.12.2001
(51) Int. Cl.: H02M 1/10, H02M 1/12, H02M 3/337

(54) **Spannungswandler für mehrere unabhängige Verbraucher**

(30) Priorität: 09.12.2000 DE 10061385
(71) Anmelder: Philips Corporate Intellectual Property GmbH, 52066 Aachen (DE); Koninklijke Philips Electronics N.V., 5621 BA Eindhoven (NL)
(72) Erfinder: Loef, Christoph c/o Philips Corp. Intel. Pro. GmbH, 52066, Aachen (DE)
(74) Vertreter: Volmer, Georg, Dipl.-Ing.

(57) **Zusammenfassung**

Die Erfindung bezieht sich auf einen Spannungswandler für zwei unabhängige Verbraucher (L1, L2) mit für einen ersten (L1) und einen zwiten (L2) Verbraucher jeweils einer Brückenschaltung (S₁, S_{2,} Sₐ, S_{b} und S₃, S₄, Sₐ, S_{b}) zur Umsetzung einer an den Brückenschaltungen (S₁, S₂, Sₐ, S_{b} und S₃, S₄, Sₐ, S_{b}) gemeinsam anliegenden Gleichspannung (U₄₅) in eine dem jeweiligen Verbraucher (L1, L2) zugeordnete Wechselspannung (U₆₈, U₉₈),
- wobei den Brückenschaltungen (S₁, S₂, Sₐ, S_{b} und S₃, S₄, Sₐ, S_{b}) zwei Schaltelemente (Sₐ, S_{b}) gemeinsam sind.

## Beschreibung

Die Erfindung bezieht sich auf einen Spannungswandler für mehrere unabhängige Verbraucher. Solche Spannungswandler dienen zur Umsetzung einer an ihrem Eingang anliegenden Spannung in unabhängig voneinander regelbare Versorgungsspannungen für die angeschlossenen Verbraucher. Zur Umwandlung einer Wechselspannung in mehrere Gleichspannungen können sie z. B. als Schaltnetzteil in einem Fernsehgerät mit Flachbildschirm eingesetzt werden.

Ein Spannungswandler, der ein öffentliches Wechselspannungsnetz belastet, unterliegt besonderen Anforderungen hinsichtlich des Stromes, der dem Wechselspannungsnetz entnommen werden darf. So darf üblicherweise der vom Spannungswandler aufgenommene Strom nur einen begrenzten Oberwellenanteil aufweisen, d.h. der Spannungswandler muss im wesentlichen einen Wirkwiderstand repräsentieren. Der Scheinwiderstandsanteil der Eingangsimpedanz des Spannungswandlers darf damit bestimmte Werte nicht überschreiten. Derartige Anforderungen sind beispielsweise in der IEC 1000-3-2 näher spezifiziert.

Aus der DE 198 24 409 A1 ist ein Spannungswandler mit einem Resonanzkonverter bekannt, der einen rein aus passiven Bauelementen bestehenden Hochsetzsteller direkt mit dem Ausgang einer Halbbrücke verbindet. Die Veröffentlichung von W. Chen, F.C. Lee und T. Yamauchi "An improved 'Charge Pump' electronic ballast with low THD and low crest factor", IEEE APEC '96 Proceedings, pp. 622-627 enthält weitere Realisierungsmöglichkeiten einer solchen Anordnung. Andererseits beschreibt J. Wüstehube, Schaltnetzteile, 2. überarbeitete Auflage, S. 139 f. eine Brückengleichrichterschaltung mit Umschaltvorrichtung, mittels derer die Brückengleichrichterschaltung an die jeweils anliegende Netzwechselspannung (110-127 Volt z. B. in den USA oder 220-240 Volt z. B. in Europa) angepasst wird, so dass die erzeugte DC-Spannung unabhängig von der anliegenden Netzwechselspannung näherungsweise gleiche Werte hat.

Der Erfindung liegt die Aufgabe zugrunde, einen möglichst kostengünstigen Spannungswandler zu schaffen, der mehrere, unabhängig voneinander regelbare Ausgangsspannungen liefern kann. Weiter soll der vom Spannungswandler aus einem Wechselspannungsnetz aufgenommene Strom nur einen begrenzten Oberwellenanteil aufweisen und im wesentlichen einen Wirkwiderstand repräsentieren.

Diese Aufgabe wird durch einen Spannungswandler gemäß Patentanspruch 1 gelöst. Einem Verbraucher, der eine unabhängig von den anderen Verbrauchern regelbare Versorgungsspannung benötigt, ist eine aus vier Schaltelementen bestehende Brückenschaltung zugeordnet. Dabei sind zwei Schaltelemente den Brückenschaltungen gemeinsam, wodurch Bauteile eingespart werden.

Im Anspruch 2 wird im Spannungswandler für einen Verbraucher ein Resonanzkonverter mit einem resonanten serien-parallelen Schwingkreis eingesetzt. Dies erlaubt zusammen mit einer entsprechenden Steuerung der Schaltelemente der dem Verbraucher zugeordneten Brückenschaltung einen größeren Übersetzungsbereich für die Wandlung der Eingangsspannung in die diesem Verbraucher zugeordnete Ausgangsspannung. Solche resonanten serien-parallelen Schwingkreise sind z. B. aus der Veröffentlichung "V.B. Beaguli, A.K.S. Bhat: Operation of the LCC-Type Parallel Resonant Converter as a Low Harmonie Rectifier. IEEE APEC, 1996, pp. 131-137" bekannt.

Anspruch 3 sieht zwei Modi für den Betrieb der Brückenschaltungen des Spannungswandlers vor. Dies gestattet z. B. die Verwendung des Spannungswandlers an unterschiedlichen Netzwechselspannungen verschiedener Wechselspannungsnetze, indem sich dadurch die Verhältnisse der Ausgangsspannungen zur am Eingang des Spannungswandlers anliegenden Spannung einstellen lassen. Diese Einstellmöglichkeit verringert die Anforderungen an die Steuerschaltung und erlaubt es die gleichen Bauelemente für Spannungswandler zu verwenden, die für den Betrieb an unterschiedlichen Eingangsspannungen oder für unterschiedliche Ausgangsspannungen vorgesehen sind. Dies führt zu einer erheblichen Kostenersparnis des Spannungswandlers.

Die abhängigen Ansprüche 4 bis 7 beziehen sich auf Erfindungsvarianten, die sich vorteilhaft auf die durch den Spannungswandler verursachte Netzbelastung, auf die praktische Einsetzbarkeit des Spannungswandlers oder auf die Baukosten des Spannungswandlers auswirken.

Die Erfindung bezieht sich aber auch in Anspruch 8 auf einen integrierten Schaltkreis, der eine für den Betrieb der Brückenschaltungen nötige Steuerschaltung in einem Bauteil integriert. Weiterhin können auch noch die Schaltelemente der Brückenschaltungen integriert werden. Durch solche Integrationen lassen sich weitere Reduktionen der Baukosten erreichen.

Ein weiterer Aspekt der Erfindung besteht darin, dass ein erfindungsgemäßer Spannungswandler besonders für Monitore und für Fernsehgeräte, z. B. mit Flachbildschirmen, geeignet ist. Diese Geräte benötigen genau geregelte und geglättete Stromversorgungen.

Diese und weitere Aspekte und Vorteile der Erfindung werden im Folgenden an Hand der Ausführungsbeispiele und insbesondere an Hand der beigefügten Zeichnungen näher erläutert. Es zeigen:
- Fig. 1: eine Ausführungsform des erfindungsgemäßen Spannungswandlers,
- Fig. 2: Schaltzustands-, Spannungs- und Stromverläufe zur Erläuterung des Betriebs der Brückenschaltungen als Halbbrückenschaltungen,
- Fig. 3: Schaltzustands-, Spannungs- und Stromverläufe zur Erläuterung des Betriebs der Brückenschaltungen als Vollbrückenschaltungen,
- Fig. 4: eine erfindungsgemäße Variante des Spannungswandlers mit einer als Hochsetzsteller wirkenden Anordnung,
- Fig. 5: einen Resonanzkonverter mit einem resonanten serien-parallelen Schwingkreis.

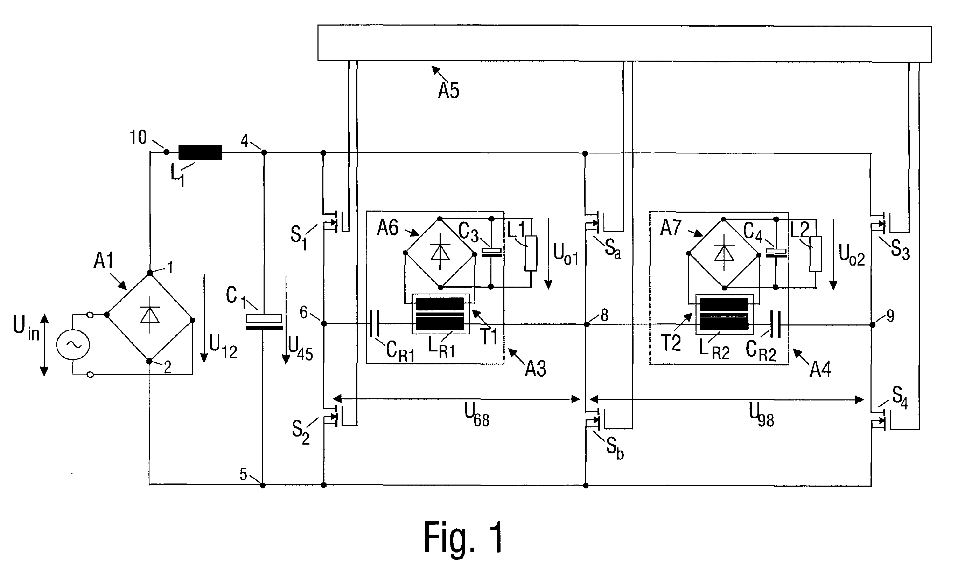

Fig. 1 zeigt eine Ausführungsform des erfindungsgemäßen Spannungswandlers. Dem Spannungswandler wird an seinem Eingang eine erste Wechselspannung Uᵢₙ zugeführt, die mittels einer aus vier Dioden bestehenden ersten Gleichrichteranordnung A1 in eine gleichgerichtete Wechselspannung U₁₂ mit positivem Pol an Punkt 1 und negativem Pol an Punkt 2 umgesetzt wird. Die erste Wechselspannung Uᵢₙ ist beispielsweise eine sinusförmige 230V-Netzspannung mit einer Frequenz von 50 Hz.

Die gleichgerichtete Wechselspannung U₁₂ wird einer Glättungsanordnung, hier bestehend aus der Reihenschaltung einer Induktivität L₁ mit einer ersten Glättungskondensatoranordnung C₁, die hier als Elektrolytkondensator ausgeführt ist, zugeführt. Dabei wird Punkt 1 der ersten Gleichrichteranordnung A1 an einem Punkt 10 mit der Induktivität L₁ gekoppelt, die selbst in einem Punkt 4 mit der positiven Seite der Glättungskondensatoranordnung C₁ koppelt. Die negative Seite der Glättungskondensatoranordnung C₁ schließlich koppelt an einem Punkt 5 mit dem Punkt 2 der ersten Gleichrichteranordnung A1. Entsprechend bezeichnet U₄₅ die an der ersten Glättungskondensatoranordnung C₁ zwischen den Punkten 4 und 5 anliegende, geglättete, gleichgerichtete Wechselspannung.

Die geglättete, gleichgerichtete Wechselspannung U₄₅ wird zwei Brückenschaltungen zugeführt. Die beiden Brückenschaltungen bestehen jeweils aus vier Schaltelementen, den Schaltelementen S₁, S₂, Sₐ, S_{b} bzw. S₃, S₄, Sₐ, S_{b}, d. h. den beiden Brückenschaltungen sind die zwei Schaltelemente Sₐ, S_{b} gemeinsam. Die Schaltelemente sind hier als Feldeffekttransistoren ausgeführt. Statt dessen können jedoch auch andere Ausführungsformen der Schalter wie z. B. IGBTs (Isolated Gate Bipolar Transistors) verwendet werden. Jeweils die Schaltelemente S₁ und S₂, S₃ und S₄, Sₐ und S_{b} bilden parallel zueinander liegende Reihenschaltungen, an denen gemeinsam die Spannung U₄₅ anliegt.

Zwischen einem Punkt 6 zwischen den Schaltelementen S₁ und S₂ und einem Punkt 8 zwischen den Schaltelementen Sₐ und S_{b} entsteht aus der gleichgerichteten und geglätteten Wechselspannung U₄₅ durch geeignetes Ein- und Ausschalten der Schaltelemente S₁, S₂, Sₐ, S_{b} eine erste weitere Wechselspannung U₆₈. Genauso entsteht zwischen einem Punkt 9 zwischen den Schaltelementen S₃ und S₄ und dem Punkt 8 zwischen den Schaltelementen Sₐ und S_{b} aus der gleichgerichteten und geglätteten Wechselspannung U₄₅ durch geeignetes Ein- und Ausschalten der Schaltelemente S₃, S₄, Sₐ, S_{b} eine zweite weitere Wechselspannung U₉₈. Diese weiteren Wechselspannungen U₆₈, U₉₈ werden nachfolgend in die den beiden Verbrauchern L1 und L2 zur Verfügung stehenden Ausgangsgleichspannungen Uₒ₁, Uₒ₂ umgesetzt. In diesem Sinne sind die beiden weiteren Wechselspannungen U₆₈, U₉₈ ihrem jeweiligen Verbraucher L1, L2 zugeordnete Wechselspannungen.

Die dem Verbraucher L1 zugeordnete Wechselspannung U₆₈ wird dem Eingang eines Resonanzkonverters A3 zugeführt, an dessen Ausgang, der zugleich der erste Ausgang des Spannungswandlers ist, eine erste Ausgangsgleichspannung Uₒ₁ entsteht, die zur Versorgung eines ersten Verbrauchers L1 dient. Genauso wird die dem Verbraucher L2 zugeordnete Wechselspannung U₉₈ dem Eingang eines Resonanzkonverters A4 zugeführt, an dessen Ausgang, der zugleich der zweite Ausgang des Spannungswandlers ist, eine zweite Ausgangsgleichspannung Uₒ₂ entsteht, die zur Versorgung eines zweiten Verbrauchers L2 dient. Die hier als ohmsche Lasten dargestellten Verbraucher L1, L2 können i. a. auch induktiver, kapazitiver oder gemischter Natur sein.

Die Resonanzkonverter A3 und A4 sind strukturell gleich aufgebaut und dienen analogen Funktionen. Sie enthalten jeweils Resonanzkreiselemente: hier eine Resonanzkapazität C_{R1} bzw. C_{R2} und einen Transformator T1 bzw. T2, der u.a. als eine Resonanzinduktivität L_{R1} bzw. L_{R2} wirkt und für eine Potentialtrennung zwischen dem Ein- und Ausgang des Resonanzkonverters A3 bzw. A4 sorgt. Die Resonanzkapazität C_{R1} bzw. C_{R2} und die Primärwicklung des Transformators T1 bzw. T2 liegen in Reihe zwischen den Punkten 6 und 8 bzw. 9 und 8 und bilden somit die Eingangsseite des Resonanzkonverters A3 bzw. A4. Dabei liegt eine Seite der Resonanzkapazität C_{R1} bzw. C_{R2} an dem Punkt 6 bzw. 9. Die auf der Sekundärseite des Transformators T1 bzw. T2 jeweils entstehende Wechselspannung wird mittels einer zweiten bzw. einer dritten aus vier Dioden bestehenden Gleichrichteranordnung A6 bzw. A7 gleichgerichtet und anschließend mittels einer hier aus jeweils einem Glättungskondensator bestehenden zweiten bzw. dritten Glättungskondensatoranordnung C₃ bzw. C₄ geglättet. Die an der Kondensatoranordnung C₃ bzw. C₄ jeweils abfallende Spannung ist die am jeweiligen Ausgang des Spannungswandlers anliegende Ausgangsgleichspannung Uₒ₁ bzw. Uₒ₂.

Die Schaltelemente S₁, S₂, Sₐ, S_{b}, S₃, S₄ sind mit einer Steuerschaltung A5 gekoppelt, die die Schaltelemente durch Anlegen geeigneter Steuersignale an die Steuereingänge der Schaltelemente steuert, d.h. einschaltet (in den leitenden Zustand überführt) oder ausschaltet (in den nichtleitenden Zustand überführt). Die Steuerschaltung A5 wird vorzugsweise mittels eines integrierten Schaltkreises (IC) realisiert, der gegebenenfalls auch die sechs Schaltelemente S₁, S₂, Sₐ, S_{b}, S₃, S₄ aufweisen kann. Dabei steuert die Steuerschaltung A5 die Schaltelemente S₁, S₂, Sₐ, S_{b}, S₃, S₄ der Brückenschaltungen S₁, S₂, Sₐ, S_{b} und S₃, S₄, Sₐ, S_{b} in zwei unterschiedlichen Modi, die unterschiedliche Werte der Verhältnisse Uₒ₁/U₆₈, Uₒ₂ /U₉₈ und damit auch unterschiedliche Werte der Verhältnisse Uₒ₁/Uᵢₙ, Uₒ₂/Uᵢₙ bewirken.

So kann durch einen Wechsel des Modus beispielsweise eine Anpassung an die am Eingang des Spannungswandlers anliegende Netzwechselspannung vorgenommen werden. Besonders vorteilhaft ist dabei die Veränderung der Verhältnisse Uₒ₁/Uᵢₙ, Uₒ₂/Uᵢₙ um etwa den Faktor 2, da sich z. B. auch die in Europa (ca. 220 bis 240 Volt) und in den USA (ca. 110 bis 127 Volt) benutzten Netzwechselspannungen etwa um einen Faktor 2 unterscheiden.

Eine solche Anpassung an die am Eingang des Spannungswandlers anliegende Netzwechselspannung kann beispielsweise durch die Steuerschaltung A5 automatisch vorgenommen werden. Dazu wird die Steuerschaltung A5 so ausgelegt, dass der Spannungswandler für den Betrieb an zwei unterschiedlich hohen Netzwechselspannungen Uᵢₙ vorbereitet ist. Damit die Steuerschaltung A5 feststellen kann, welche der beiden vorgesehenen Netzwechselspannungen Uᵢₙ dann im augenblicklichen Betrieb am Spannungswandler anliegt, kann man beispielsweise die gleichgerichtete und geglättete Wechselspannung U₄₅ oder auch direkt die Netzwechselspannung Uᵢₙ der Steuerschaltung A5 zur Messung zuführen. Um die automatische Anpassung an die beiden vorbereiteten Netzwechselspannungen vorzunehmen, schaltet die Steuerschaltung A5 dann bei der niedrigeren der beiden vorbereiteten Netzwechselspannungen in den zweiten Modus, während sie bei der höheren der beiden vorbereiteten Netzwechselspannungen den ersten Modus benutzt.

Im ersten Modus steuert die Steuerschaltung A5 die Schaltelemente S₁, S₂, Sₐ, S_{b}, S₃, S₄ in einer Weise, dass die Brückenschaltungen S₁, S₂, Sₐ, S_{b} und S₃, S₄, Sₐ, S_{b} als Halbbrückenschaltungen betrieben werden. Dazu ist eines der beiden Schaltelemente Sₐ oder S_{b} ständig aus- und das andere ständig eingeschaltet, also beispielsweise Sₐ ständig aus- und S_{b} ständig eingeschaltet. Die jeweils beiden übrigen Schaltelemente S₁ und S₂ bzw. S₃ und S₄ werden mit geeigneten Tastgraden ein- und ausgeschaltet, wobei sie zur Vermeidung eines Kurzschlusses nie gleichzeitig eingeschaltet werden. Durch diesen Halbbrückenbetrieb liegt als erste bzw. zweite weitere Wechselspannung U₆₈ bzw. U₉₈ am Eingang der Resonanzkonverter A3 bzw. A4 während der Leitendphase der Schalter S₁ bzw. S₃ die gleichgerichtete und geglättete Wechselspannung U₄₅ an, während in der Leitendphase der Schalter S₂ bzw. S₄ die weiteren Wechselspannungen U₆₈ bzw. U₉₈ auf den Kurzschlusswert von idealerweise 0 Volt sinken.

Im zweiten Modus steuert die Steuerschaltung A5 die Schaltelemente S₁, S₂, Sₐ, S_{b}, S₃, S₄ in einer Weise, dass die Brückenschaltungen S₁, S₂, Sₐ, S_{b} und S₃, S₄, Sₐ, S_{b} als Vollbrückenschaltungen betrieben werden. Dazu werden die Schaltelemente S₁, S₂, Sₐ, S_{b}, S₃, S₄ paarweise mit geeigneten Tastgraden und unter Vermeidung eines Kurzschlusses ein- und ausgeschaltet. D.h. die je zwei Schalter S₁ und S_{b}, S₂ und Sₐ, S₃ und S_{b}, S₄ und Sₐ bilden Paare in dem Sinne, dass die Einphasen von S₁ und S₃ innerhalb der Einphase von S_{b} und die Einphasen von S₂ und S₄ innerhalb der Einphase von Sₐ liegen, und zur Vermeidung eines Kurzschlusses die Schalter S₁ und S₂, Sₐ und S_{b} bzw. S₃ und S₄ nie gleichzeitig eingeschaltet werden. Durch diesen Vollbrückenbetrieb liegt als erste bzw. zweite weitere Wechselspannung U₆₈ bzw. U₉₈ am Eingang der Resonanzkonverter A3 bzw. A4 während der Leitendphase der Schalter S₁ bzw. S₃ die gleichgerichtete und geglättete Wechselspannung U₄₅ an, während in der Leitendphase der Schalter S₂ bzw. S₄ die negative gleichgerichtete und geglättete Wechselspannung U₄₅ anliegt.

Während im Halbbrückenbetrieb des ersten Modus in der Leitendphase der Schalter S₂ bzw. S₄ am Eingang der Resonanzkonverter A3 bzw. A4 also die Kurzschlussspannung von idealerweise 0 Volt anliegt, liegt im Vollbrückenbetrieb des zweiten Modus die negative gleichgerichtete und geglättete Wechselspannung U₄₅ an. Dies bewirkt, bei ansonsten gleichen Schaltungsbedingungen, eine Vergrößerung der Verhältnisse Uₒ₁ /Uᵢₙ bzw. Uₒ₂/Uᵢₙ.

Alternativ kann für den zweiten Modus, wie in der DE 198 24 409 A1 und der dort zitierten Literaturstelle "Unitrode Power Supply Seminar, SEM-800, Bob Mammano und Jeff Putsch: Fixed-Frequency, Resonant-Switched Pulse Width Modulation with Phase-Shifted Control, Sep 91, Seiten 5-1 bis 5-7 (insbesondere Fig. 1)" angegeben, eine sogenannte "Phase-Shifted PWM Full-Bridge"-Ansteuerung der Schaltelemente der Brückenschaltungen S₁, S₂, Sₐ, S_{b} und S₃, S₄, Sₐ, S_{b} gewählt werden.

In beiden Modi kann die Steuerschaltung A5 auch eine Anpassung der Schaltfrequenzen und der Tastgrade der Schaltelemente S₁, S₂, Sₐ, S_{b}, S₃, S₄ vornehmen. Weiter kann bei Verwendung der "Phase-Shifted PWM Full-Bridge"-Ansteuerung auch eine Anpassung der Größe der Phasenverschiebungen zwischen den Schaltzeitpunkten der Schalterpaare S₁ und S_{b}, S₂ und Sₐ, S₃ und S_{b}, S₄ und Sₐ durchgeführt werden. Diese Anpassungen können für die nicht gemeinsamen Schalterpaare S₁, S₂ und S₃, S₄ der Brückenschaltungen S₁, S₂, Sₐ, S_{b} bzw. S₃, S₄, Sₐ, S_{b} unabhängig voneinander durchgeführt werden. Dadurch lassen sich die Größe und Stabilität der von dem Spannungswandler gelieferten weiteren Wechselspannungen U₆₈ und U₉₈ unabhängig voneinander einstellen und damit auch die Größe und Stabilität der vom Spannungswandler gelieferten Ausgangsgleichspannungen Uₒ₁ und Uₒ₂.

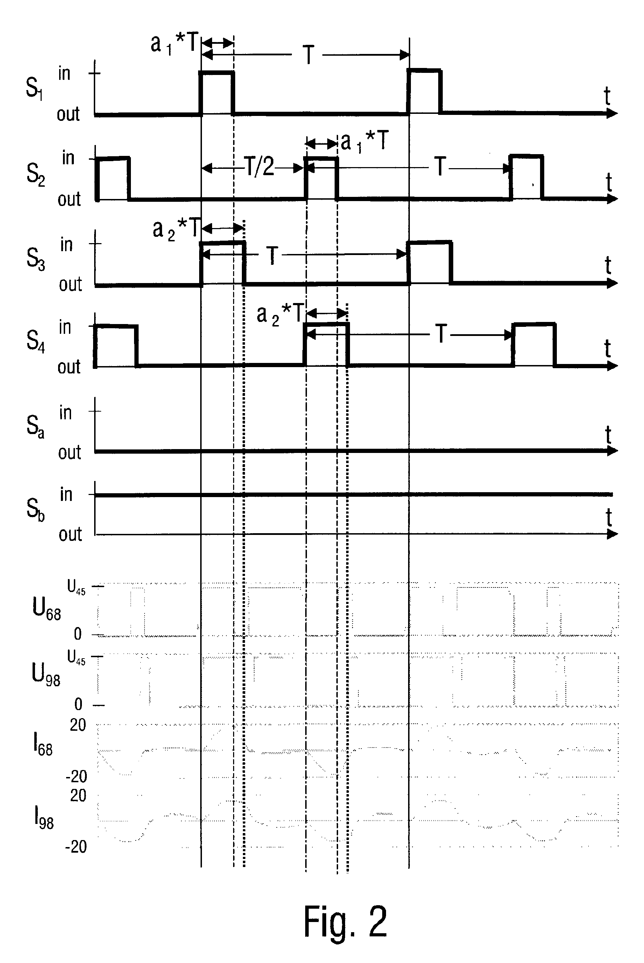

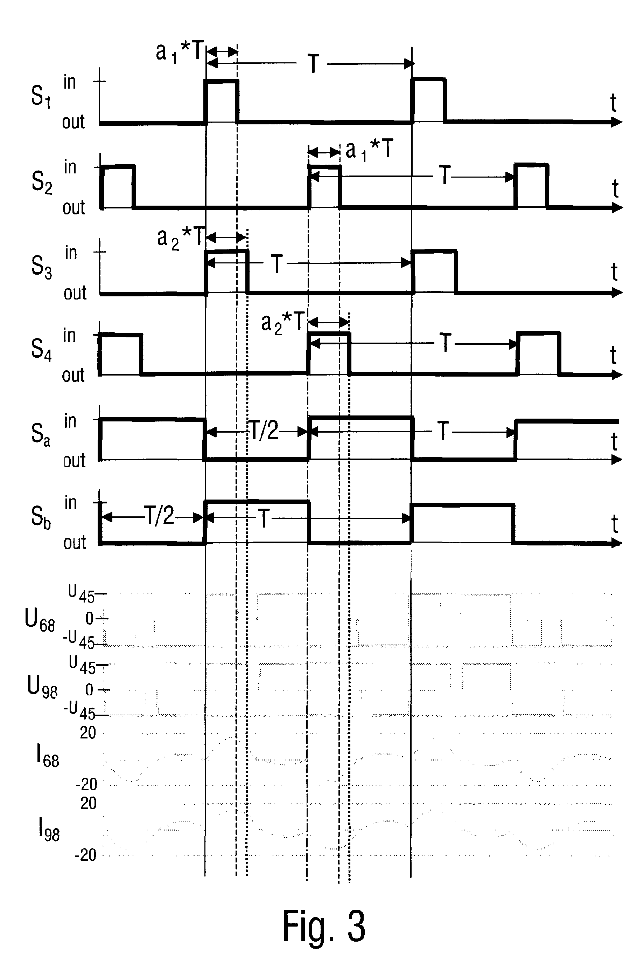

Zur näheren Erläuterung der Betriebsweise der Brückenschaltungen S₁, S₂, Sₐ, S_{b} und S₃, S₄, Sₐ, S_{b} zeigen die Fig 2 und 3 beispielhafte Schaltzustands-, Spannungs- und Stromverläufe für den Halbbrücken- bzw. Vollbrückenbetrieb dieser Schaltungen. In den Figuren ist die Zeit bei allen Teildiagrammen nach rechts aufgetragen, während die Schaltzustände, Spannungen bzw. Ströme nach oben aufgetragen sind. Die Zeitachsen aller Teildiagramme verlaufen synchron. Die Teildiagramme beider Figuren zeigen von oben nach unten die folgenden Schaltzustände, Spannungen bzw. Ströme:
- die Schaltzustände der Schalter S₁, S₂, S₃, S₄, Sₐ, S_{b},
- die Spannung U₆₈, die zwischen den Punkten 6 und 8 am Resonanzkonverter A3 anliegt,
- die Spannung U₉₈, die zwischen den Punkten 9 und 8 am Resonanzkonverter A4 anliegt,
- den Strom I₆₈, der vom Punkt 6 zum Punkt 8 durch die Eingangsseite des Resonanzkonverters A3 fließt,
- den Strom I₉₈, der vom Punkt 9 zum Punkt 8 durch die Eingangsseite des Resonanzkonverters A4 fließt.

Alle dargestellten Spannungen bewegen sich zwischen 0 Volt und dem positiven bzw. negativen Wert der gleichgerichteten und geglätteten Wechselspannung U₄₅, die Ströme sind in willkürlichen Einheiten angegeben. In diesem Beispiel werden die Schalter S₁, S₂, S₃, S₄, Sₐ, S_{b} mit einer einheitlichen Schaltfrequenz mit der Periodendauer T betrieben. Die Tastgrade der Schalter S₁ und S₂ betragen einheitlich a₁, d. h. die beiden Schalter sind während einer Periodendauer T für einen Zeitraum von a₁ *T eingeschaltet und ansonsten ausgeschaltet. Die Tastgrade der Schalter S₃ und S₄ betragen einheitlich a₂. Die Schalter S₁ und S₃ werden gleichzeitig eingeschaltet, während die Einschaltzeitpunkte der Schalter S₂ und S₄ gegenüber denen der Schalter S₁ und S₃ um eine halbe Periodendauer T /2 zeitlich versetzt sind.

Im in Fig. 2 dargestellten Halbbrückenbetrieb des ersten Modus ist der Schalter Sₐ ständig ausgeschaltet und der Schalter S_{b} ständig eingeschaltet. Im in Fig. 3 dargestellten Vollbrückenbetrieb des zweiten Modus dagegen werden die Schalter Sₐ und S_{b} wechselweise mit einem Tastgrad von jeweils 1 /2 ein- und ausgeschaltet. Wenn also Sₐ eingeschaltet ist, ist S_{b} ausgeschaltet und umgekehrt. Der Einschaltzeitpunkt von S_{b} ist derselbe wie der von S₁ und S₃, während der von Sₐ identisch ist mit dem von S₂ und S₄.

Zum Verständnis der sich durch diese Schaltverhältnisse ergebenden Spannungs- und Stromverläufe, die in den unteren Teildiagrammen der Fig. 2 und 3 dargestellt sind, ist noch anzumerken, dass die Schalter S₁, S₂, S₃, S₄, Sₐ, S_{b} hier als Feldeffekttransistoren (FETs) ausgeführt wurden, die bautechnisch bedingt eine zum eigentlichen Schalter parallel liegende Diode beinhalten. Beim Einbau der FETs ist daher ihre Richtungs-abhängigkeit zu beachten. Beispielsweise leitet die Diode des Schalters S₁ von Punkt 6 zu Punkt 4.

Um eine gleichmäßige Netzbelastung des Spannungswandlers zu erreichen, wird in einer weiteren Ausführungsform der Erfindung vorgeschlagen, die Schalter S₁, S₂, S₃, S₄, Sₐ, S_{b} mit variablen Schaltfrequenzen und/oder Tastgraden zu betreiben. Durch eine geeignete Anpassung der Schaltfrequenzen und/oder Tastgrade durch die Steuerschaltung A5 lässt sich dann eine gleichmäßige Leistungsentnahme aus dem Netz erreichen. Dabei ist es besonders vorteilhaft, die Schaltfrequenzen und/oder Tastgrade der Schalter S₁, S₂, S₃, S₄, Sₐ, S_{b} mit der doppelten Frequenz der am Eingang des Spannungswandlers anliegenden ersten Wechselspannung Uᵢₙ zu modulieren, d. h. für diese Schaltfrequenzen und/oder Tastgrade einen periodischen Zeitverlauf zu wählen, dessen Frequenz gleich der doppelten Frequenz von Uᵢₙ ist. Insbesondere können die Schalter S₁, S₂, S₃, S₄, Sₐ, S_{b} auch mit einer einheitlichen konstanten oder variablen Schaltfrequenz betrieben werden.

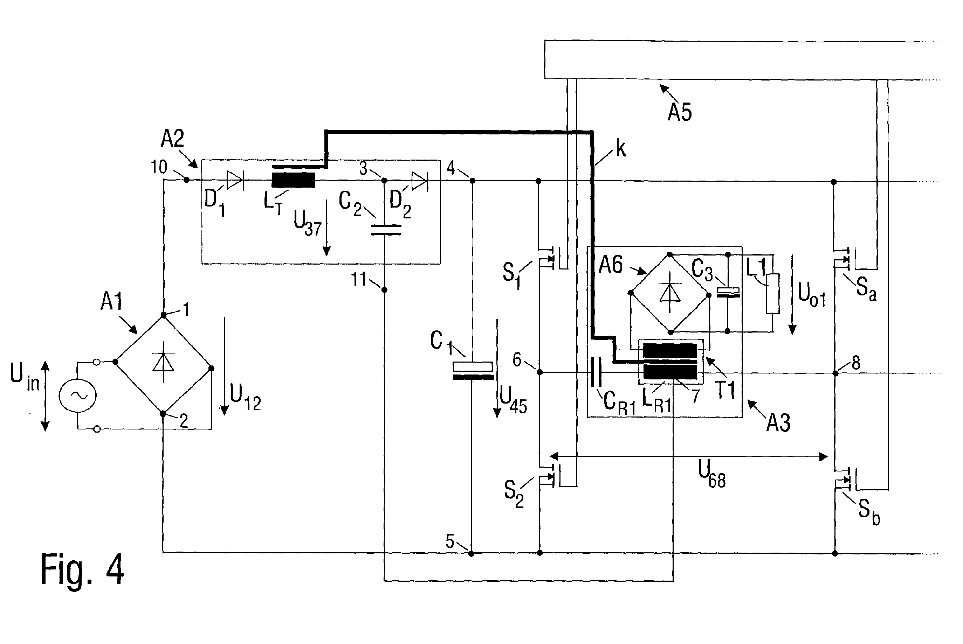

Fig. 4 zeigt eine erfindungsgemäße Variante des Spannungswandlers mit einer als Hochsetzsteller wirkenden Anordnung A2. Diese Anordnung A2 besteht zunächst aus einer Reihenschaltung aus einer ersten Diode D₁, einer Induktivität L_{T} und einer zweiten Diode D₂. Diese Reihenschaltung ersetzt die Induktivität L₁ in der in Fig. 1 beschriebenen Ausführungsform des Spannungswandlers. D. h. die Reihenschaltung koppelt an Stelle der Induktivität L₁ mit der Diode D₁ im Punkt 10 an den Punkt 1 der ersten Gleichrichteranordnung A1 und mit der Diode D₂ im Punkt 4 an die erste Kondensatoranordnung C₁. Weiter besteht die als Hochsetzsteller wirkende Anordnung A2 noch aus einem Koppelkondensator C₂. Dieser koppelt auf einer Seite an einen Verbindungspunkt 3 zwischen der Induktivität L_{T} und der Diode D₂ und auf der anderen Seite in einem Punkt 11 an einen Punkt 7 innerhalb eines der Resonanzkonverter, hier A3. Dieser Punkt 7 innerhalb des Resonanzkonverters A3 wird durch Teilen der Primärwicklung des Transformators T1 und Herausführen des Teilungspunktes 7 realisiert. Außerdem ist die Induktivität L_{T} magnetisch über die Kopplung k mit der Resonanzinduktivität L_{R1} des Resonanzkonverters A3 gekoppelt.

Durch diese kapazitive und induktive Kopplung über den Koppelkondensator C₂ und die magnetische Kopplung k der Induktivität L_{T} wird während des Betriebs des Spannungswandlers ein mit der Arbeitsfrequenz des Resonanzkonverters A3 moduliertes Potential U₃₇ an den Punkt 3 innerhalb der als Hochsetzsteller wirkenden Anordnung A2 rückgekoppelt. Da die Diode D₂ den Strom nur in Richtung von Punkt 3 zu Punkt 4 leitet, bewirkt diese Rückkopplung ein Hochstellen der geglätteten, gleichgerichteten Wechselspannung U₄₅, die an der ersten Glättungskondensatoranordnung C₁ abfällt. Die Diode D₁ verhindert einen Stromrückfluss zum Eingang des Spannungswandlers.

Die hier gezeigte Ausführungsform der als Hochsetzsteller wirkenden Anordnung A2 und ihrer Kopplungen zu einem der Resonanzkonverter ist nur eine von mehreren Möglichkeiten. So können zum Beispiel die Diode D₁ und die Induktivität L_{T} einzeln oder gemeinsam weggelassen werden. Für weitere Erläuterungen und Ausgestaltungen des Wirkungsprinzips der als Hochsetzsteller wirkenden Anordnung A2 wird auf die DE 198 24 409 A1 verwiesen. Dort sind auch weitere Realisierungsmöglichkeiten des Punktes 7 dargestellt, die alle den Zweck erfüllen, ein mit der Arbeitsfrequenz des Resonanzkonverters A3 moduliertes Potential U₃₇ an den Punkt 3 zurückzukoppeln. Unschwer kann der Fachmann auch noch weitere Varianten angeben.

Während Fig. 4 nur eine als Hochsetzsteller wirkende Anordnung A2 zeigt, die kapazitiv und induktiv mit dem Resonanzkonverter A3 gekoppelt ist, kann dieses Prinzip auch mehrfach angewendet werden. Dazu sind die Reihenschaltungen aus z. B. einer jeweiligen ersten Diode D₁, Induktivität L_{T} und zweiten Diode D₂ der als Hochsetzsteller wirkenden Anordnungen zueinander parallel zwischen die Punkte 10 und 4 zu schalten, während ihre kapazitiven und induktiven Kopplungen analog zu denen in Fig. 4 gezeigten erfolgen. D. h. ihr jeweiliger Koppelkondensator C₂ koppelt in einem jeweiligen Punkt 11 an einen jeweiligen Punkt 7 im jeweiligen Resonanzkonverter A3, A4. Entsprechend koppelt ihre jeweilige Induktivität L_{T} magnetisch über die jeweilige Kopplung k mit der jeweiligen Resonanzinduktivität L_{R1}, L_{R2} des jeweiligen Resonanzkonverters A3, A4.

Insbesondere ist es vorteilhaft, die Resonanzkonverter A3, A4, die einen Verbraucher mit hohem Leistungsbedarf versorgen, mit einer jeweiligen als Hochsetzsteller wirkenden Anordnung A2 zu koppeln. Denn diese Resonanzkonverter A3, A4 führen zu einer hohen Netzbelastung. Da sie i. d. R. in der Nähe ihrer jeweiligen Resonanzfrequenz betrieben werden, führt ihre Kopplung mit einer jeweiligen als Hochsetzsteller wirkenden Anordnung A2 zu einem besonders wirkungsvollen Hochstellen der geglätteten, gleichgerichteten Wechselspannung U₄₅. Dies ergibt somit eine besonders vorteilhafte Gegenmaßnahme gegen die ungleichmäßige Netzbelastung.

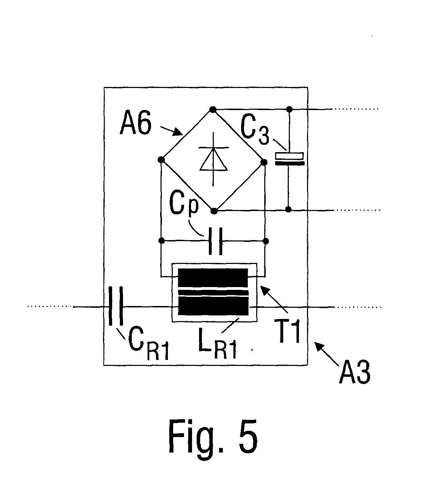

Fig. 5 zeigt eine erfindungsgemäße Variante eines der Resonanzkonverter, hier A3, mit einem resonanten serien-parallelen Schwingkreis. Im Unterschied zu dem bereits in Fig. 1 beschriebenen Resonanzkonvertern A3 und A4 besitzt die Variante von Fig. 5 eine zusätzliche Kapazität Cₚ, die zur Sekundärwicklung des Transformators T1 parallel liegt. Dadurch wird der Resonanzkonverter A3 zu einem serien-parallelen Schwingkreis, wie er z. B. aus der Veröffentlichung "V.B. Beaguli, A.K.S. Bhat: Operation of the LCC-Type Parallel Resonant Converter as a Low Harmonic Rectifier. IEEE APEC, 1996, pp. 131-137" bekannt ist.

Während im Vorhergehenden die Erfindung als Spannungswandler für genau zwei unabhängige Verbraucher L1, L2 beschrieben wurde, ist es für den Fachmann offensichtlich, dass sich das erfinderische Prinzip, zwei Schaltelemente Sₐ, S_{b} gemeinsam in den Brückenschaltungen zu nutzen, auch auf mehr als zwei Verbraucher übertragen lässt. Unter Benutzung des erfinderischen Prinzips lassen sich also auch Spannungswandler für mehr als zwei Verbraucher bauen, deren Brückenschaltungen alle oder auch nur z. T. zwei Schaltelemente Sₐ, S_{b} gemeinsam nutzen.

## Patentansprüche

1. Spannungswandler für zwei unabhängige Verbraucher (L1, L2) mit für einen ersten (L1) und einen zweiten (L2) Verbraucher jeweils einer Brückenschaltung (S₁, S₂, Sₐ, S_{b} und S₃, S₄, Sₐ, S_{b}) zur Umsetzung einer an den Brückenschaltungen (S₁, S₂, Sₐ, S_{b} und S₃, S₄, Sₐ, S_{b}) gemeinsam anliegenden Gleichspannung (U₄₅) in eine dem jeweiligen Verbraucher (L1, L2) zugeordnete Wechselspannung (U₆₈, U₉₈), wobei
- wobei den Brückenschaltungen (S₁, S₂, Sₐ, S_{b} und S₃, S₄, Sₐ, S_{b}) zwei Schaltelemente (Sₐ, S_{b}) gemeinsam sind.

2. Spannungswandler nach Anspruch 1,
der für einen Verbraucher (L1, L2) einen Resonanzkonverter (A3, A4) mit einem resonanten serien-parallelen Schwingkreis enthält.

3. Spannungswandler nach Anspruch 1,
**dadurch gekennzeichnet,**
**dass** der Spannungswandler eine Steuerschaltung (A5) zur Steuerung der Schaltelemente (S₁, S₂, Sₐ, S_{b}, S₃, S₄) der Brückenschaltungen (S₁, S₂, Sₐ, S_{b} und S₃, S₄, Sₐ, S_{b}) enthält, wobei ein erster Modus vorgesehen ist, in dem die Brückenschaltungen durch Veränderung der Schaltzustände der jeweiligen nicht gemeinsamen ersten und zweiten Schaltelemente (S₁, S₂ und S₃, S₄) als Halbbrückenschaltungen betrieben werden und die Schaltzustände der gemeinsamen dritten und vierten Schaltelemente (Sₐ, S_{b}) nicht verändert werden, und wobei ein zweiter Modus vorgesehen ist, in dem die Brückenschaltungen durch Veränderung der Schaltzustände aller jeweiligen vier Schaltelemente (S₁, S₂, Sₐ, S_{b} und S₃, S₄, Sₐ, S_{b}) als Vollbrückenschaltungen betrieben werden.

4. Spannungswandler nach Anspruch 3,
**dadurch gekennzeichnet,**
**dass** der Spannungswandler dazu vorgesehen ist, dass an seinem Eingang wahlweise zwei unterschiedlich hohe Spannungen (Uᵢₙ) anliegen können, und
**dass** die Steuerschaltung (A5) eine automatische Umschaltung zwischen den beiden Modi der Brückenschaltungen (S₁, S₂, Sₐ, S_{b} und S₃, S₄, Sₐ, S_{b}) in Abhängigkeit von der anliegenden Eingangsspannung (Uᵢₙ) derart vorsieht, dass bei niedriger Eingangsspannung (Uᵢₙ) die Brückenschaltungen (S₁, S₂, Sₐ, S_{b} und S₃, S₄, Sₐ, S_{b}) im zweiten Modus als Vollbrückenschaltungen betrieben werden, während sie bei hoher Eingangsspannung (Uᵢₙ) im ersten Modus als Halbbrückenschaltungen betrieben werden.

5. Spannungswandler nach Anspruch 3,
**dadurch gekennzeichnet,**
**dass** die Steuerschaltung (A5) für eine Anpassung der Schaltfrequenzen und/oder der Tastgrade der Schaltelemente (S₁, S₂, S₃, S₄, Sₐ, S_{b}) der Brückenschaltungen (S₁, S₂, Sₐ, S_{b} und S₃, S₄, Sₐ, S_{b}) vorgesehen ist.

6. Spannungswandler nach Anspruch 3,
**dadurch gekennzeichnet,**
**dass** die Steuerschaltung (A5) dazu vorgesehen ist, die Schaltelemente (S₁, S₂, S₃, S₄, Sₐ, S_{b}) der Brückenschaltungen (S₁, S₂, Sₐ, S_{b} und S₃, S₄, Sₐ, S_{b}) mit einer identischen Schaltfrequenz zu betreiben.

7. Spannungswandler nach Anspruch 3,
**dadurch gekennzeichnet,**
**dass** die Steuerschaltung (A5) dazu vorgesehen ist, die Schaltfrequenzen und/oder Tastgrade der Schaltelemente (S₁, S₂, S₃, S₄, Sₐ, S_{b}) der Brückenschaltungen (S₁, S₂, Sₐ, S_{b} und S₃, S₄, Sₐ, S_{b}) mit der doppelten Frequenz einer am Eingang des Spannungswandlers anliegenden ersten Wechselspannung (Uᵢₙ) zu modulieren.

8. Integrierter Schaltkreis mit mindestens einer Steuerschaltung (A5) für die Schaltelemente (S₁, S₂, S₃, S₄, Sₐ, S_{b}) eines in Anspruch 1 angeführten Spannungswandlers.

9. Monitor mit einem Spannungswandler gemäß Anspruch 1.

10. Fernsehgerät, z. B. mit Flachbildschirm, mit einem Spannungswandler gemäß Anspruch 1.1.
